(19) Europäisches Patentamt
European Patent Office
Office européen des brevets

(11) Veröffentlichungsnummer: **0 390 074 B1**

# (12) EUROPÄISCHE PATENTSCHRIFT

(45) Veröffentlichungstag der Patentschrift: **21.12.94**

(51) Int. Cl.5: **A01N 31/02**, A01N 31/06

(21) Anmeldenummer: **90105817.2**

(22) Anmeldetag: **27.03.90**

## (54) Lockmittel sowie Verfahren und Vorrichtungen zum Anlocken von Borkenkäfern.

(30) Priorität: **28.03.89 CS 1869/89**

(43) Veröffentlichungstag der Anmeldung:
**03.10.90 Patentblatt 90/40**

(45) Bekanntmachung des Hinweises auf die Patenterteilung:
**21.12.94 Patentblatt 94/51**

(84) Benannte Vertragsstaaten:
**AT CH DE IT LI SE**

(56) Entgegenhaltungen:
**DE-A- 2 800 479**
**DE-A- 2 945 655**
**DE-A- 3 541 467**

**SCIENCE, Band 154, Nr. 3748, 28. Oktober 1966, Washington, US; R.M.SILVERSTEIN et al.: "Sex Attractants in Frass Produced by Male Ips confusus in Ponderosa Pine" Seiten 509-510**

**DIE NATURWISSENSCHAFTEN, 64. Jahrgang, Heft 2, Februar 1977, Springer Verlag, Berlin, Heidelberg; A.BAKKE et al.: "Field Response to a New Pheromonal Compound Isolated from Ips typographus" Seiten 98-99**

(73) Patentinhaber: **SLOVCHEMIA, STATNY PODNIK, CHEMIKA, KONCERNOVY PODNIK**
**Ul. Odbojarov 1**
**832 19 Bratislava (SK)**

(72) Erfinder: **Varkonda, Stefan Csc, RNDr.**
**Borodácova 17**
**Bratislava (CS)**
Erfinder: **Konecny, Václav, CSc, RNDr.**
**Poludnikova 5**
**Bratislava (CS)**
Erfinder: **Kriz, Miroslav CSc, Dipl.-Ing.**
**Fedinova 6**
**Bratislava (CS)**
Erfinder: **Kuruc, Ludovit CSc, RNDr.**
**Tehelná 25**
**Bratislava (CS)**
Erfinder: **Oblozinsky, Anton, Dipl.-Ing.**
**Závadská 5**
**Bratislava (CS)**
Erfinder: **Salva, Imrich**
**Landauova 27**
**Bratislava (CS)**
Erfinder: **Benda, Ferdinand**
**Strachotova 19**
**Bratislava (CS)**

EP 0 390 074 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Erfinder: **Vrkoc, Ján, RNDr.**
**Nad Sárkou 75**
**Praha 6 (CS)**

(74) Vertreter: **Patentanwälte Beetz - Timpe - Siegfried Schmitt-Fumian - Mayr**
**Steinsdorfstrasse 10**
**D-80538 München (DE)**

## Beschreibung

Die Erfindung betrifft Lockmittel sowie Verfahren und Vorrichtungen zum Anlocken bzw. Fangen von Borkenkäfern, die vor allem zur Anlockung des Borkenkäfers Ips typographus geeignet sind. Die Lockmittel enthalten in einem Wirkstoffgemisch S-cis-Verbenol.

Es ist bekannt, daß der Borkenkäfer Ips typographus durch hohe Überlebensfähigkeit und unter günstigen Bedingungen auch durch eine hohe Reproduktionsfähigkeit gekennzeichnet ist, was insbesondere bei älteren, gegebenenfalls geschwächten Fichtenbeständen eine außerordentliche Gefährdung darstellen kann. Bei starkem Vorkommen verursacht er beträchtliche wirtschaftliche und ökologische Schäden.

Gegenwärtig werden im wesentlichen zwei Verfahren zum Schutz von Fichtenbeständen vor Borkenkäfern angewandt. Das erste beruht auf der mühsamen und wirtschaftlich nachteiligen Verwendung von gefällten Fichtenstämmen als Fänger und der chemischen Vernichtung durch Aufsprühen von insecticiden Mitteln. Außer den oben genannten Nachteilen stellt die unerwünschte, durch die eingesetzten Insecticide verursachte Störung des ökologischen Gleichgewichts des Waldes eine weitere negative Seite dieses Verfahrens dar. Das zweite zur Bekämpfung von Borkenkäfern angewandte Verfahren beruht auf dem Massenfang der Käfer mit Hilfe von aus Verdampfern freigesetzten Pheromonen, wobei die Verdampfer in geeigneten Fängern angebracht sind.

Als Hauptkomponenten des Kommunikationssystems einiger Borkenkäfer sind bekannt:

cis-Verbenol, 2-Methyl-6-methylen-2,7-octadien-4-ol (Ipsdienol), 2-Methyl-6-methylen-7-octen-4-ol (Ipsenol) (Science 154, Nr. 3748, 509-510, 1966), ferner trans-Verbenol, Verbenon, Myrtenol, trans-Myrtenol, 2-Phenylethanol (J. chem. Ecol. 10, 1029, 1984) und 2-Methyl-3-buten-2-ol (Naturwissenschaften 64, 98, 1977).

Ein bekanntes Mittel zum Anlocken des Borkenkäfers (Ips typographus) beruht auf der Erkenntnis, daß sich einzelne Komponenten des natürlichen Pheromon-Kommunikationssystems des Borkenkäfers gegenseitig synergisieren; es enthält cis-Verbenol, 2-Methyl-3-buten-2-ol und gegebenenfalls auch Ipsdienol (CS-A-196 414).

Es sind ferner auch primäre, von den Wirts-Fichtenbäumen produzierte Lockstoffe des Borkenkäfers bekannt, wie beispielsweise einige monoterpenische Kohlenwasserstoffe, sauerstoffhaltige Monoterpene, sesquiterpenische Kohlenwasserstoffe und sauerstoffhaltige Sesquiterpene. Daneben ist auch die Verwendung von 3-Ketobutanol, 3-Epoxybutan-2-ol und 2-Methyl-2-epoxypropanol als Lockstoffe für den Borkenkäfer bekannt (SU-A-683 046).

SU-A-692 122 betrifft ein Mittel zum Anlocken des Borkenkäfers Ips typographus, das Ipsenol, Ipsdienol und trans-Verbenol sowie zur Erhöhung des Wirkungsgrades noch 3-Ketobutanol, 3-Epoxybutan-2-ol, 2-Methyl-2-epoxypropanol, Citronellol und schwere Fraktionen der etherischen Öle der Fichte enthält. Es ist auch möglich, die Lockwirkung eines Gemisches von 2-Methyl-3-butan-2-ol mit (S)-cis-Verbenol durch Zusatz von Xylol zu steigern (CS-Patentanmeldung PV 463-81).

CS-A-244 985 betrifft ein Mittel zum Anlocken von Borkenkäfern, das aus Alleinol der allgemeinen Formel

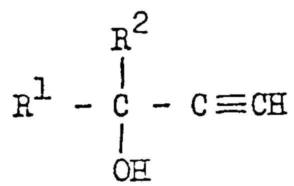 ,

worin $R^1$ und $R^2$ unabhängig voneinander Methyl oder Ethyl bedeuten, und aus S-cis-Verbenol und dem primären Lockstoff des Wirtsbaumes sowie gegebenenfalls aus Xylol besteht.

Der Erfindung liegt die Aufgabe zugrunde, Lockmittel sowie Verfahren und Vorrichtungen zum Anlocken von Borkenkäfern und insbesondere Ips typographus anzugeben, die sich durch hohe Lockwirksamkeit auszeichnen.

Die Aufgabe wird anspruchsgemäß gelöst.

Die erfindungsgemäßen Lockmittel enthalten ein Wirkstoffgemisch mit S-cis-Verbenol und sind dadurch gekennzeichnet, daß das Wirkstoffgemisch aus 0,25 bis 6,25 % S-cis-Verbenol und 93,75 bis 99,75 % 2-Methoxypropan-1-ol besteht, bezogen auf die Gesamtmenge an S-cis-Verbenol und 2-Methoxypropan-1-ol.

Beim Verfahren und in den Vorrichtungen gemäß der Erfindung werden diese Lockmittel eingesetzt.

Die Erfindung wird im folgenden anhand von Ausführungsbeispielen näher erläutert.

Beispiel 1

Die Lockwirkung des Lockmittels gemäß der Erfindung wurde direkt im Gelände geprüft. Die Lokalität bestand aus einem ungefähr 70 Jahre alten Fichtenbestand mit beigemischten Tannen und Buchen, in einer Seehöhe von 600 bis 700 m (Gemeinde Hrinová, Lokalität Bratkovský most, Gebiet Volanyl, CS).

Die Wirkstoffe wurden mit Hilfe von Dochtlockern appliziert, die an 20 bis 25 m voneinander und vom Rand des Bestandes entfernten Flugbarrierefängern angebracht wurden. Um den sog. Positionseffekt (Begünstigung) zu eliminieren, wurde das Vorkommen der Borkenkäfer in bezug auf die Positionen der Fänger langzeitig (vom 27.5 bis 14.7. 1987) mit Hilfe eines kommerziellen Präparats (Etokap, hergestellt in der Tschechoslowakei) geprüft; die geprüften Lockmittel wurden danach in Fänger mit einem im wesentlichen gleichen Vorkommen (am 14.7.1987) eingebracht, wobei auch ein Austausch der Positionen vorgenommen wurde. Die Zahl der gefangenen Individuen (Ips typographus) in den Fängern wurde nach einer einmonatigen Exposition (am 18.8.1987) ermittelt. Die Ergebnisse sind in Tabelle 1 angeführt und durch die absolute Anzahl der gefangenen Individuen in den einzelnen Fängern (2 Wiederholungen) ausgedrückt.

Tabelle 1

| Wirksamkeit der Pheromon-Mittel in Geländeversuchen | | | | |
|---|---|---|---|---|
| Lockmittel | Wirkstoffgehalt in 1 Locker | | | Mittelwert der Anzähl der gefangenen Individuen im Fänger |
| | S-cis-Verbenol (g) | 2-Methoxypropan--1-o1 (ml) | 2-Methyl-3-butin(ml) -2-ol (ml) | |
| MEP | 0,1 | 1,9 | - | 905 |
| MEP | 0,1 | 1,9 | - | 859 |
| IT-Etokap I | 0,1 | - | 1,9 | 690 |
| IT-Etokap II | 0,1 | - | 1,9 | 800 |

Beispiel 2

Die Lockwirkung des Lockmittels wurde in der Lokalität Dechtice (Forstverwaltung Smolenice CS) auf dieselbe Weise wie in Beispiel 1 geprüft. Die Verdampfer mit den geprüften Gemischen wurden am 25.4.1989 (A) und im zweiten Versuch in derselben Lokalität am 26.4.1989 (B) in die Fänger eingesetzt. Die Zahl der gefangenen Individuen wurde bei beiden Versuchen am 17.5.1989 ermittelt. In den folgenden Tabellen 2 und 3 sind die Ergebnisse durch die absolute Anzahl der gefangenen Individuen pro Fänger angegeben.

Tabelle 2

| (Versuch A) | | | | |
|---|---|---|---|---|
| Lockmittel | Wirkstoffgehalt in 1 Locker | | | Anzahl der gefangenen In-2-ol |
| | S-cis-Verbenol (g) | 2-Methoxypropan-1-ol (ml) | 2-Methyl-3-butin-2-ol (ml) | |
| MEP I | 0,1 | 1,9 | - | 1 375 |
| MEP II | 0,15 | 1,85 | - | 819 |
| IT-Etokap | 0,1 | - | 1,9 | 691 |

Tabelle 3

| (Versuch B) | | | | |
|---|---|---|---|---|
| Lockmittel | Wirkstoffgehalt in 1 Locker | | | Anzahl der gefangenen Individuen |
| | S-cis-Verbenol (g) | 2-Methoxypropan--1-ol (ml) | 2-Methyl-3-butin-2-ol (ml) | |
| Mep III | 0,05 | 1,95 | - | 439 |
| Mep II | 0,15 | 1,85 | - | 409 |
| IT-Etokap | 0,1 | - | 1,9 | 294 |

Beispiel 3

Die Wirkung ausgewählter Gemische auf Borkenkäfer wurde unter Laboratoriumsbedingungen mit einem Olfaktometer (Walkway-Olfaktometer) bestimmt. Die Ergebnisse sind in Tabelle 4 aufgeführt.

Tabelle 4

| Gemisch Nr. | Mengenanteil der Wirkstoffkomponenten | | Anzahl der reagierenden Borkenkäfer, Mittelwert aus 3 Wiederholungen |
|---|---|---|---|
| | S-cis-Verbenol (%) | 2-Metholypropan-1-ol (%) | |
| 1 | 6,25 | 93,75 | 14,33 |
| 2 | 5,00 | 95,00 | 16,33 |
| 3 | 3,75 | 96,25 | 18,00 |
| 4 | 0,25 | 99,75 | 17,00 |
| 5 | - | 100 | 1 |
| 6 | Standardgemisch IT-Etokap | | 12,66 |
| 7 | Kontrolle ohne Behandlung | | 0 |

Beispiel 4

Die Gemische 1 bis 4 von Tabelle 4 des Beispiels 3 mit der angeführten Zusammensetzung wurden in Feldversuchen getestet (Lokalität Dechtice); sie wurden auf Dochtverdampfer (Chemika) in einem Gesamtvolumen von 3 ml pro Verdampfer aufgebracht. Zur Eliminierung des Positionseffekts wurden nach jeder Bewertung die Positionen der Verdampfer getauscht. Die durch die Anzahl der gefangenen Individuen des Borkenkäfers (Ips typographus) ausgedrückte Wirksamkeit ist in Tabelle 5 angeführt. Die Applikation wurde am 13.6.1989 durchgeführt.

Tabelle 5

| Gemisch Nr. | Tag der Bewertung | | |
|---|---|---|---|
| | 14. 7. | 28. 7. | 16. 8. |
| 1 | 2 186 | 304 | 164 |
| 2 | 3 387 | 106 | 132 |
| 3 | 4 008 | 490 | 334 |
| 4 | 2 814 | 179 | 149 |
| IT-Etokap (Chemika) | 1 243 | 15 | 55 |

Beispiel 5

Dieses Beispiel stellt eine Wiederholung des Beispiels 4 dar (Lokalität Jablonica, CS). Die Gemische wurden am 19.7. 1989 appliziert. Die durch die Anzahl der gefangenen Individuen des Borkenkäfers pro Fänger ausgedrückte Wirksamkeit ist in Tabelle 6 angeführt.

Tabelle 6

| Gemisch Nr. | Tag der Bewertung | |
|---|---|---|
| | 28.7. | 16. 8. |
| 1 | 194 | 96 |
| 2 | 121 | 97 |
| 3 | 83 | 122 |
| 4 | 82 | 56 |
| IT-Etokap (Chemika) | 76 | 50 |

Beispiel 6

Die Wirksamkeit der beim Borkenkäfer Ips typographus geprüften und in der Lokalität Dechtice am 13.6.1989 applizierten Lockmittel gemäß der Erfindung wurden am 21.6.1989 und im Zeitraum vom 21.6.1989 bis 14.7.1989 bewertet. Es wurden folgende Präparate getestet:

| Bezeichnung des Lockmittels | Appliziertes Volumen (ml) | Mengen der Komponenten im Gemisch | |
|---|---|---|---|
| | | S-cis-Verbenol (g) | 2-Methoxypropan-1-ol (ml) |
| 1.1 | 2 | 0,1 | 1,9 |
| 1.1.a | 3 | 0,15 | 2,85 |
| 1.2 | 2 | 0,075 | 1,925 |
| 1.2.a | 3 | 0,1125 | 2,8875 |
| 1.3 | 2 | 0,05 | 1,95 |
| 1.3.a | 3 | 0,075 | 2,925 |
| 1.4 | 2 | 0,125 | 1,875 |
| 1.4.a | 3 | 0,1875 | 2,8125 |

Die erhaltenen Versuchsergebnisse sind in den Tabellen 7, 8, 9 und 10 aufgeführt.

Tabelle 7

Wirksamkeit der Lockmittel bei Ips typographus. Applikation am 13.6.1989, Bewertung am 21.6.1989

| Lockmittel | Wiederholung I | II | III | Summe | Mittelwert der Anzahl der gefangenen Individuen pro Fänger |
|---|---|---|---|---|---|
| 1.1 | 72 | 1 | 0 | 73 | 24,3 |
| 1.1a | 571 | 30 | 18 | 619 | 206,3 |
| 1.2 | 204 | 40 | 15 | 259 | 86,3 |
| 1.2a | 221 | 28 | 54 | 303 | 101,1 |
| 1.3 | 93 | 27 | 14 | 134 | 44,6 |
| 1.3a | 212 | 20 | 26 | 258 | 86,0 |
| 1.4 | 58 | 1 | 0 | 59 | 19,6 |
| 1.4a | 68 | 4 | 12 | 84 | 28,0 |
| IT-Etokap | 88 | 43 | 1 | 132 | 44,0 |

Tabelle 8

Wirksamkeit der Lockmittel bei Ips typographus. Applikation am 13.6.1989; Fänge im Zeitraum vom 21.6.1989 bis 14.7.1989 bewertet

| Lockmittel | Wiederholung I | II | III | Summe | Mittelwert der Anzahl der gefangenen Individuen pro Fänger |
|---|---|---|---|---|---|
| 1.1 | 506 | 0 | 123 | 629 | 209,6 |
| 1.1a | 1775 | 809 | 803 | 3387 | 1129,0 |
| 1.2 | 1521 | 393 | 948 | 2862 | 954,0 |
| 1.2a | 1732 | 446 | 1810 | 4008 | 1336,0 |
| 1.3 | 825 | 276 | 763 | 1864 | 621,3 |
| 1.3a | 1114 | 358 | 1342 | 2814 | 938,0 |
| 1.4 | 749 | 93 | 329 | 1171 | 390,0 |
| 1.4a | 1058 | 273 | 855 | 2186 | 728,6 |
| IT-Etokap | 421 | 729 | 93 | 1243 | 414,3 |

Tabelle 9

Wirksamkeit der Lockmittel bei Ips typographus. Applikation am 13.6.1989, Fänge im Zeitraum vom 14.7.1989 bis 28.7.1989 (I) und vom 28.7.1989 bis 16.8.1989 (II) bewertet

| Lockmittel | I | II | Summe | Mittelwert der Anzahl der gefangenen Individuen pro Fänger |
|---|---|---|---|---|
| 1.1 | 127 | 23 | 150 | 75,0 |
| 1.1a | 1C6 | 35 | 141 | 70,5 |
| 1.2 | 272 | 127 | 299 | 149,5 |
| 1.2a | 490 | 212 | 702 | 351,0 |
| 1.3 | 104 | 37 | 141 | 70,5 |
| 1.3a | 172 | 93 | 272 | 136,0 |
| 1.4 | 360 | 243 | 603 | 301,5 |
| 1.4a | 304 | 68 | 372 | 186,0 |
| IT-Etokap | 15 | 5 | 20 | 10,0 |

Tabelle 10

Wirksamkeit der Lockmittel bei Ips typographus in der Lokalität Jablonica. Applikation am 19.7.1989, Bewertung am 28.7.1989 (I) und am 16.8.1989 (II)

| Lockmittel | I | II | Summe | Mittelwert der Anzahl der gefangenen Individuen pro Fänger |
|---|---|---|---|---|
| 1.1 | 86 | 66 | 15,2 | 7,6 |
| 1.1a | 121 | 97 | 218 | 109,0 |
| 1.2 | 56 | 70 | 126 | 63,0 |
| 1.2a | 83 | 122 | 205 | 102,5 |
| 1.3 | 96 | 23 | 119 | 59,5 |
| 1.3a | 52 | 56 | 108 | 54,0 |
| 1.4 | 97 | 71 | 168 | 84,0 |
| 1.4a | 194 | 96 | 290 | 145,0 |
| IT-Etokap | 0 | 50 | 50 | 25,0 |

**Patentansprüche**

1. Lockmittel zum Anlocken von Borkenkäfern, insbesondere von Ips typographus, das in einem Wirkstoffgemisch S-cis-Verbenol enthält, dadurch gekennzeichnet, daß das Wirkstoffgemisch aus 0,25 bis 6,25 % S-cis-Verbenol

und
93,75 bis 99,75 % 2-Methoxypropan-1-ol
besteht, bezogen auf die Gesamtmenge an S-cis-Verbenol und 2-Methoxypropan-1-ol.

2. Verfahren zum Anlocken von Borkenkäfern, insbesondere von Ips typographus, mit einem Lockmittel, das S-cis-Verbenol enthält, gekennzeichnet durch Verwendung eines Lockmittels nach Anspruch 1.

3. Lockvorrichtung zum Anlocken und ggfs. zum Fangen von Borkenkäfern, insbesondere von Ips typographus, mit einem Wirkstoffgemisch als Lockmittel, das S-cis-Verbenol enthält, gekennzeichnet durch ein Wirkstoffgemisch nach Anspruch 1.

**Claims**

1. An attractant for attracting bark beetles, more particularly Ips typographus, containing S-cis-verbenol in an active substance mixture, characterised in that the active substance mixture consists of
0.25 to 6.25% S-cis-verbenol
and
93.75 to 99.75% 2-methoxypropan-1-ol,
referred to the total quantity of S-cis-verbenol and 2-methoxypropan-1-ol.

2. A method of attracting bark beetles, more particularly Ips typographus, with an attractant containing S-cis-verbenol, characterised by the use of an attractant according to claim 1.

3. An attractant device for attracting and, if required, trapping bark beetles, more particularly Ips typographus, with an attractant in the form of an active substance mixture containing S-cis-verbenol, characterised by an active substance mixture according to claim 1.

**Revendications**

1. Appât pour attirer les bostryches, surtout Ips typographus, qui contient du S-cis-verbénol dans un mélange de principes actifs, caractérisé en ce que le mélange de principes actifs est constitué de
0,25 à 6,25 % de S-cis-verbénol et
93,75 à 99,75 % de 2-méthoxypropane-1-ol,
par rapport à la quantité totale de S-cis-verbénol et de 2-méthoxypropane-1-ol.

2. Procédé destiné à attirer les bostryches, surtout Ips typographus, par un appât qui contient du S-cis-verbénol, caractérisé par l'utilisation d'un appât selon la revendication 1.

3. Dispositif à appât destiné à attirer et, le cas échéant à attraper les bostryches, surtout Ips typographus, par un mélange de principes actifs en tant qu'appât, qui contient du S-cis-verbénol, caractérisé par un mélange de principes actifs selon la revendication 1.